# EUROPÄISCHE PATENTSCHRIFT

(11) **EP 2 767 377 B1**
(45) Veröffentlichungstag und Bekanntmachung des Hinweises auf die Patenterteilung: **27.01.2016**
(21) Anmeldenummer: 14000341.9
(22) Anmeldetag: 30.01.2014
(51) Int. Cl.: B29B 17/02, B29B 17/04, G03F 7/00, B29B 13/08

(54) **Verfahren und Vorrichtung zum Rückgewinnen der Ausgangsstoffe von mehrlagigen Verbundwerkstoffen mit mindestens einer Lage mit klebriger Oberfläche**
Method and device for the recovery of the starting material of a multilayer composite with at least one layer with an adhesive surface
Procédé et dispositif de récupération des matières premières d'un composite multicouche avec au moins une couche ayant une surface adhésive

(30) Priorität: 13.02.2013 DE 102013002407
(43) Veröffentlichungstag der Anmeldung: 20.08.2014
(73) Patentinhaber: recyplast GmbH, 56204 Hillscheid (DE)
(72) Erfinder: Wachsmann, Michael, Dr.-Ing., 56179 Vallendar (DE)
(74) Vertreter: Strauss, Peter

(56) Entgegenhaltungen:
- EP-B1- 1 913 086
- WO-A1-80/02672
- WO-A1-2011/140244
- DE-A1- 2 636 805
- DE-A1- 3 409 656
- DE-A1- 19 726 621
- GB-A- 2 270 990

## Beschreibung

### Technisches Gebiet

Das Rückgewinnen von Materialien oder Werkstoffen für eine weitere Verwendung erlangt in heutiger Zeit immer mehr Bedeutung. Maßgeblich dafür ist zum einen, dass die Ressourcen an bestimmten Rohstoffen zum Teil drastisch abnehmen, zum anderen, dass die Neugewinnung von Rohstoffen im Allgemeinen verhältnismäßig aufwändig, bisweilen auch gefährlich ist (z. B. Untertage-Bergbau) und nicht zuletzt, dass fast sämtliche Aufbereitungsprozesse in irgendeiner Weise die Umwelt spürbar belasten. Unter diesen Aspekten werden manche - noch bis vor kurzem verächtlich als Abfall, Müll oder Unrat abgetane - Überschuss-, Begleit- oder Hilfsprodukte, Verpackungen etc. allmählich "salonfähig", weil sie auf dem Weg zu einer technischen Nutzung oder Anwendung bereits viele Stufen durchlaufen und damit grundsätzlich eine gewisse Wertigkeit haben.

Hier kann sich allerdings auch das Problem ergeben, dass sie u. U. bereits zu weit in einer bestimmten Weise fortentwickelt oder determiniert sind, so dass erst eine gewisse Aufbereitung sie wieder verwendbar oder nutzbar macht. Jedenfalls geht es darum, bereits verwendete oder überschüssige Produkte nicht einfach zu vernichten, d. h. Deponien anheim zu geben oder aber (soweit gefahrlos möglich) zu verbrennen, um wenigstens noch ihre thermische Energie zu nutzen, sondern sie sollen gezielt zum Gegenstand einer Kreislaufwirtschaft gemacht werden. Das ist Inhalt und Ziel des sogenannten "Recycling".

Die vorliegende Erfindung liegt auf diesem Gebiet. Sie betrifft nämlich zunächst ein Verfahren zum Rückgewinnen der Ausgangsstoffe von mehrlagigen Verbundwerkstoffen mit mindestens einer Lage mit klebriger Oberfläche, wie Flexfolien oder dergleichen mit einer teigigen Mittelschicht oder -lage aus einer teilpolymerisierten Kunststoffmischung auf der Basis von Styrobutadienstyrol (SBS) mit an der Oberfläche anhaftenden Abdeckfolien aus einem Polymerisat wie Poly-Ethylen-Terephthalat (PET). Ferner betrifft die Erfindung eine Vorrichtung zur Durchführung des Verfahrens wie auch Verwendungsvorschläge für die Recyclate.

Teilaspekte des nachfolgend beschriebenen Anmeldungsgegenstandes beinhalten folgende Schriften:

| | |
|---|---|
| DE 197 43 545 A1 | (Verfahren) |
| DE 10 2010 007 004 A1 | (Verfahren und Vorrichtung) |
| DE 699 234 685 T2 | (Verfahren) |

Von näherer Bedeutung sind die nachstehenden Dokumente:

| | |
|---|---|
| D1 | GB 2 270 990 A (DU PONT [US]) 30. März 1994 (1994-03-30) |
| D2 | DE 26 36 805 A1 (AIR PROD & CHEM) 24. Februar 1977 (1977-02-24) |

D1 ist aus dem technischen Feld des Recyclings. Es offenbart ein Verfahren um Photopolymerplatten zu recyceln und wird als nächstliegender Stand der Technik gegenüber dem Gegenstand des Anspruchs 1 angesehen.

D1 offenbart ein Verfahren zum Rückgewinnen der Ausgangsstoffe von mehrlagigen Verbundwerkstoffen mit mindestens einer Lage mit klebriger Oberfläche, wie Flexfolien (Seite 3, Zeile 10-14) oder dergleichen mit einer teigigen Mittelschicht oder -lage aus einer polymerisierten Kunststoffmischung auf der Basis von Styrobutadienstyrol (SBS) (Seite 1, Zeile 33-35 und Beispiel 1 auf Seite 9) mit an der Oberfläche anhaftenden Abdeckfolien aus einem Polymerisat wie z. B. Poly-Ethylen-Terephthalat (PET) (Seite 1, Zeile 33-35 und Beispiel 3 auf Seite 14) wobei das Material von einem Bandmesser von der Trägerfolie getrennt wird.

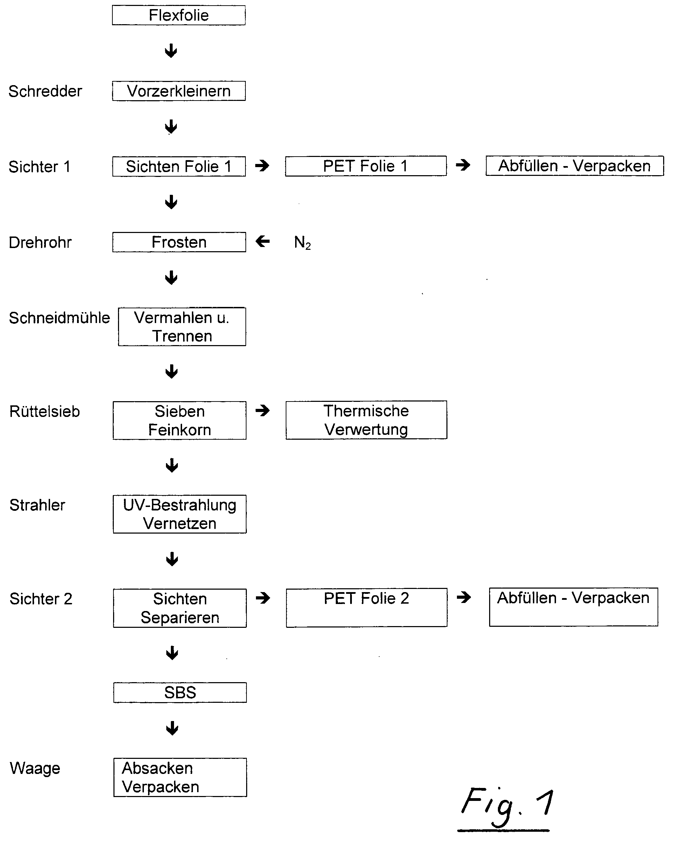

D2 ofenbart eine Vorrichtung mit einer Aufgabestation und einer sich daran anschließenden Transportstrecke (Fig.1) die zur Beförderung des aufzuarbeitenden Werkstoffes vorgesehen ist. Die Transportstrecken führt das Material nacheinander zu folgenden Einrichtungen: einem Tiefkühler (Fig.1, (3)), einer Schneidmühle (Fig.1, (4)), einem Rüttelsieb (Fig.1,(11)), einem Sichter (Fig.1,(11)), sowie einem Abscheider (Fig.1,(31)) und/oder einer Entnahmestation oder Abfüllstation (Fig.1,(26)).

Bei dem hier - konkret, wie auch beispielhaft - in Rede stehenden Verbundwerkstoff handelt es sich um einen Werkstoff, aus dem Druckplatten für die Printmedien der Druckbranche hergestellt werden können. Die Trivialbezeichnung für diesen Werkstoff lautet Flexfolie. Solche Flexfolien werden vom Kunden oder auch für den Kunden zuallererst zu Formaten geschnitten. Dabei ergeben sich kleinstückige Randabfälle, die es zu verwerten gilt, nämlich deren Ausgangsstoffe oder Ursprungsbestandteile es rückzugewinnen gilt.

Um das Verständnis für die besondere Problematik oder die komplexe Aufgabenstellung zu schärfen, soll zunächst die Anwendung der formatierten Flexfolie noch etwas näher beschrieben und erläutert werden.

Die Flexfolie ist im Allgemeinen 3-4-lagig konzipiert, wobei das als spätere Druckplatte wirkende Nutzteil die Mittellage oder Mittelschicht bildet. Stofflich handelt es sich um eine Kunststoffmischung auf der Basis von Styrobutadienstyrol (SBS). Die Kunststoffmischung ist von pastöser bis teigiger Konsistenz (da noch nicht vollständig auspolymerisiert) und besitzt eine klebrige Oberfläche. In diesem Zustand lässt sich die Oberfläche verhältnismäßig leicht strukturieren, d.h. reliefartig gestalten, so dass die Druckplatte in ihren Vertiefungen Farbe aufnehmen und darin halten kann, um sie beim Andruck an einen zu bedruckenden Gegenstand (Werkstück) abzugeben und einen Aufdruck zu erzeugen. Dies kommt für jede Art von Werkstück in Betracht, beispielsweise Objekte aus Papier, Pappe, Karton, Glas, Keramik, Kunststoff, Metall usw., wobei es darauf ankommt, dass sie über eine Oberfläche von geeigneter werkstofflicher Beschaffenheit verfügen. Man spricht dann allgemein von Substraten.

Die Anlieferung von Flexfolien zur Herstellung von Druckplatten erfolgt wegen der Klebrigkeit der Mittellage (=Kern), eingebettet zwischen zwei Kunststofffolien aus einem handelsüblichen Polymerisat, nämlich in der Regel Poly-Ethylen-Terephthalat (PET). Davon haftet eine Folie, nämlich die untere mit einem Kleber versehene Folie stark an, während die andere (obere) Folie unbehandelt und deutlich weniger adhäsiv ist. Der weitere Weg von einer Flexfolie zu einer Druckplatte gestaltet sich wie folgt.

Von den zurechtgeschnittenen, d. h. zu bedarfsgerechten Formaten geschnittenen späteren Druckplatten (Rohlingen) wird zunächst die leicht anhaftende obere Folie abgezogen und auf die dann freiliegende Oberfläche der Mittelschicht eine das Druckbild beinhaltende Maske (ebenfalls eine Folie) aufgelegt und anschließend unter einer UV-Lampe oder einem Laserstrahler bestrahlt/belichtet. Dabei wirkt durch die Maske hindurchfallendes Licht polymerisierend und praktisch partiell härtend auf die Oberfläche der späteren Druckplatte. Die nicht oder nur schwach bestrahlten Partien der späteren Druckplatte können anschließend mit Hilfe einer wässrigen Flüssigkeit mehr oder weniger tief ausgewaschen werden, was zu dem gewünschten Druckrelief führt. Die so hergestellte Druckplatte wird vor ihrem Einsatz nochmals insgesamt einer Bestrahlung ausgesetzt, um als Ganzes vollständig auszureagieren. Hat die Druckplatte später dem gewünschten Zweck gedient, wird sie anschließend zu Abfall.

Abfälle ergeben sich allerdings - wie bereits erwähnt - auch schon zu Anfang beim Formatieren. Dort entstehen nämlich Randabfälle bei der noch unbelichteten Flexfolie. Diese Abfälle, wie sie bei den Formatzuschnitten der Druckplatten-Rohlinge anfallen, sind komplexer als die abgenutzten Druckplatten und bilden den Gegenstand der nachfolgenden Betrachtungen. Man könnte es vielleicht als Vorteil ansehen, dass dabei die Flexfolie noch nicht ausreagiert ist; allerdings steht einer unmittelbaren Nutzung oder Weiterverarbeitung zu anderem Zweck der Umstand entgegen, dass der Kern oder das wesentliche Nutzteil eine klebrige Oberfläche besitzt, was abgesehen von der Notwendigkeit, die einzelnen Lagen und Stoffe zu trennen, grundsätzlich zur Folge hat, dass jedes weitere Handling erschwert ist. Das gilt sowohl für die notwendigen Verfahrensschritte als auch für die dazu heranzuziehende(n) Vorrichtung(en). Die bis jetzt bekannten Verfahren und Vorrichtungen eignen sich jedenfalls nicht zur unmittelbaren Verarbeitung von Werkstoffen mit klebriger Oberfläche; letztere neigen nämlich zum Verklumpen und verursachen damit schnell Betriebsstörungen. Oder die Werkstoffe verkleben an Geräteoberflächen, Werkzeugen und Anlageteilen, mit denen sie verarbeitet werden sollen.

Abhilfe konnte bis jetzt dadurch geschaffen werden, dass auf klebrige Oberflächen Trennmittel aufgebracht werden, wozu insbesondere das Pudern von Oberflächen zählt. Die zahlreichen winzigen Puderpartikel wirken dabei als Abstandhalter. Abgesehen davon, dass mit dem Pudern ein neuer Stoff oder eine neue, fremde Komponente zu dem zu behandelnden Werkstoff hinzutritt und u.U. dessen Qualität für die weitere Bearbeitung, Formung sowie den späteren Gebrauchszweck verändert, bedeutet das Pudern oder allgemeiner gesagt, das Einbringen von Trennmitteln in jedem Falle auch, dass sich der Aufwand bei den Vorrichtungen wie auch den Betriebsmitteln erhöht.

Des Weiteren ist es bekannt, die in Rede stehenden kritischen Materialien auf tiefe Temperaturen herabzukühlen (zu frosten), wobei klebrige Teile verspröden und für die Zeit des Verbleibens bei tiefen Temperaturen ihre Klebeneigung aufgeben. Wie gesagt, wird aber mittels Tiefkühlen die Klebrigkeit nicht dauerhaft aufgehoben.

Eine andere Verfahrenstechnik beinhaltet die Umhüllung des klebrigen Materials mit Stoffen, die das Kleben dauerhaft aufheben. Diese Verfahren sind als Beschichten oder Coating bekannt. Beschichten oder Coating verändert noch wesentlich stärker als das Pudern die Stoffeigenschaft und ist auch deshalb nur begrenzt einsetzbar.

### Darstellung der Erfindung

Hier setzt nun die Erfindung an. Sie möchte ein neues Verfahren sowie eine geeignete Vorrichtung zur Durchführung des Verfahrens vorschlagen, welche eine vollständige Trennung des Verbundes von mehrlagigen Verbundwerkstoffen und ein Separieren in unterschiedliche Materialien oder Stoff-Fraktionen erlauben.

Gelöst werden kann diese komplexe Aufgabe bezüglich des Verfahrens dadurch, dass der aufzubereitende Verbundwerkstoff - vorzugsweise mittels flüssigem Stickstoff (N₂) - tiefgekühlt und in gefrostetem Zustand vermahlen und gesiebt wird, wobei anfallendes Feinkorn oder Staub als störende Fraktion abgeführt und für eine mögliche anderweitige, z. B. thermische Verwertung aufgefangen wird, dass anschließend der verbliebene Werkstoff mit UV-Licht zwecks vollständiger Polymerisation bestrahlt und danach einem Sichter zugeführt wird, von wo Abdeckfolien-Partikel als weitere Fraktion und wieder verwendbarer Rohstoff (PET) abgeführt und aufgefangen werden, und dass der danach verbleibende, allein noch aus dem Material der ursprünglichen Mittelschicht bestehende Werkstoff ggf. unter weiterer Bestrahlung mit UV-Licht als wieder verwendbarer Rohstoff (SBS) entnommen wird.

Eine Leistungssteigerung ist noch dadurch möglich, dass der Verbundwerkstoff zuerst vorzerkleinert und insbesondere geschreddert wird.

Insbesondere erweist sich als vorteilhaft, wenn zur Entfernung und Rückgewinnung von nur schwach anhaftenden Abdeckfolien der ggf. vorzerkleinerte Verbundwerkstoff zunächst einem ersten Sichter zugeführt wird, von wo die schwach anhaftenden, leichten und bereits durch die mechanische Einwirkung des Schredderns abgängigen Abdeckfolien-Partikel als erste Fraktion abgeführt und als wieder verwendbarer Werkstoff (PET) aufgefangen werden.

Eine zusätzliche Verbesserung ist dadurch erreichbar, dass der verbleibende - allein noch aus dem Material der ursprünglichen Mittelschicht bestehende - Werkstoff abschließend nochmals mit UV-Licht bestrahlt wird.

Die Vorteile der Erfindung mehren sich, wenn der verbleibende, allein noch aus dem Material der ursprünglichen Mittelschicht bestehende Werkstoff am Ende des Verfahrens sogleich abgesackt, gewogen und ggf. weiter verpackt wird.

Die Erfindung beruht auf einer geschickten Nutzung physikalischer und chemischer Vorgänge für einen Prozess zur Zerkleinerung, Trennung, Separierung und Auspolymerisation. Letzteres bedeutet eine vollständige Vernetzung und ist ein Vorgang, der durch Bestrahlung auch bei tiefen Temperaturen ausgeführt werden kann. Das Tiefkühlen dient hauptsächlich der Trennung, weil sich unterschiedliche Stoffe mit voneinander abweichenden Ausdehnungskoeffizienten gegeneinander zu verschieben suchen. Zusätzlich führt das Tiefkühlen zu einer Verspödung mit der Folge, dass eine zuvor bestehende Klebeneigung zumindest vorübergehend eingeschränkt wird. Aber erst mittels einer Auspolymerisation kann die Klebeneigung dauerhaft aufgehoben werden.

Nach dem Vorschlag der Erfindung können also teils klebrige, teigige Materialien in Verbunden aus Kunststoff-Abfällen in separierte, für spätere Anwendungen ausreichend sortenreine und auch rieselfähige Fraktionen verwandelt werden. Die Erfindung ermöglicht es auch, während der Aufbereitung einen trockenen Zustand aufrechtzuerhalten, indem sie ein kryogenes Vermahlen unter trockenem, flüssigem Stickstoff vorschlägt. Dagegen besteht beim Arbeiten mit Luft - atmosphärische Luft ist immer feucht - die Gefahr einer Befeuchtung und Beeinträchtigung der Materialqualität. Das erfindungsgemäße Verfahren beinhaltet auch Arbeitsschritte, denen die Beseitigung von Toxizität inhärent ist. So werden toxische Rezepturbestandteile durch Lichteinwirkung zu nichttoxischen Verbindungen umgewandelt.

Die Erfindung hat den Vorteil, Materialien für die weitere Verwendung im Sinne von Kreislaufwirtschaft im Gebrauch zu behalten und erst nach mehrmaliger Nutzung einer thermischen Verwertung zu überlassen. Ein solcher, immer häufiger anzutreffender Erfindungsgedanke zielt ab auf Schonung von Rohstoffressourcen, erhebliche Energieeinsparungen und Begrenzung der CO₂-Emmission.

Das hier vorgeschlagene Verfahren zur Aufbereitung von Flexfolien für Druckplatten aus einer Mischung von Kunststoffkomponenten und Folien aus Poly-Ethylen-Terephthalat oder auch anderen Kunststoffen ist bezüglich der einzelnen Verfahrensschritte den jeweiligen Anforderungen anpassbar. Es kann dazu dienen, eine Fülle von Kunststoffverbunden zu Einzelfraktionen aufzubereiten. Aber auch die Aufbereitung von Kunststoff-Metall-Verbunden ist möglich.

Eine erfindungsgemäße Vorrichtung ist gekennzeichnet durch eine Aufgabestation und sich daran anschließende Transportstrecken zur Beförderung des aufzuarbeitenden Werkstoffes, wobei die Transportstrecken nacheinander zu folgenden Einrichtungen führen: einem Tiefkühler, einer Schneidmühle, einem Rüttelsieb, mindestens einem UV-Strahler, einem Sichter sowie einem Abscheider und/oder einer Entnahmestation oder Abfüllstation.

Eine weitergebildete Vorrichtung ist dadurch gekennzeichnet, dass sie zusätzlich einen Schredder zur anfänglichen Vorzerkleinerung des gesamten Werkstoffes umfasst sowie daran anschließend einen ersten Sichter zur Trennung nur schwach anhaftender Abdeckfolien-Partikel von der teigigen Mittelschicht und einen ersten Abscheider und/oder eine erste Entnahmestation oder Abfüllstation für das wieder verwendbare Material (PET) der Abdeckfolie.

### Kurze Beschreibung der Zeichnung

Nachfolgend wird die Erfindung in Verbindung mit der Darstellung eines Fließbildes, eines Funktionsschemas sowie von zwei Ausführungsbeispielen für eine Vorrichtung zur Durchführung des erfindungsgemäßen Verfahrens beschrieben. Darin zeigen:
- Fig. 1: ein Fließbild,
- Fig. 2: ein Funktionsschema,
- Fig. 3: eine Standard-Vorrichtung in schematischer Draufsicht und
- Fig. 4: eine erweiterte Vorrichtung, ebenfalls in schematischer Draufsicht.

Das Fließbild gemäß Fig. 1 veranschaulicht, in welcher Reihenfolge die hier in Betracht kommenden Verfahrensschritte aufeinander folgen, und welche Produkte oder Stoffe, ausgehend von einer Flexfolie, entstehen können bzw. auch zusätzlich (vgl. N₂) in das Verfahren eingeführt werden sollen. Es werden dazu auch die dafür vorgesehenen Maschinen und Geräte benannt. Ferner wird die Verwendung oder auch Weiterbehandlung der aus dem Verfahren ausgeschiedenen Produkte oder Stoffe angegeben. Insoweit ist das Fließbild selbstredend.

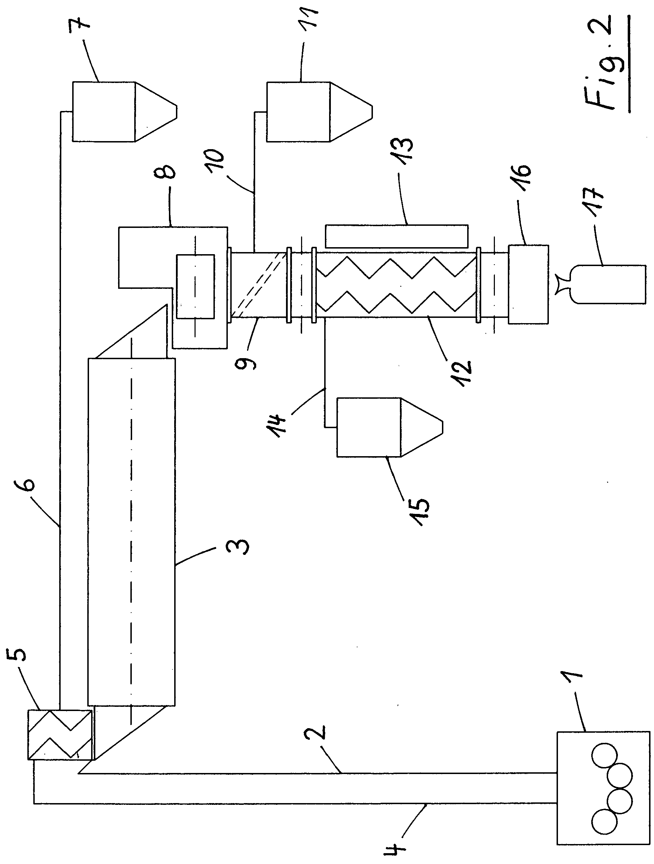

Das Funktionsschema nach Fig. 2 führt näher in den grundsätzlichen technischen Aufbau und das funktionale Zusammenwirken der einzelnen Stationen und Aggregate ein und liefert insoweit einen Überblick.

Von einem Schredder 1 führt wahlweise eine Förder- oder Transportstrecke 2 zu einem Drehrohr 3 bzw. eine zweite Transportstrecke 4 zu einem Sichter 5, welcher einerseits über eine Transportstrecke 6 mit einem ersten Abscheider 7 (einem Zyklon) und andererseits mit dem Drehrohr 3 verbunden ist. Im Abscheider 7 wird eine erste Folien-Fraktion aufgefangen, während der Werkstoff im Drehrohr 3 gefrostet und sogleich an eine sich an das Drehrohr 3 unmittelbar anschließende Schneidmühle 8 abgegeben wird.

Auf die Schneidmühle 8 folgt eine Siebeinrichtung, genauer gesagt ein Rüttelsieb 9, von wo anfallendes Feinkorn (Staub) über eine Transportstrecke 10 an einen weiteren Abscheider 11 abgeführt wird. Der so gereinigte Werkstoff wird einem weiteren Sichter 12 und einer UV-Strahleranlage 13 ausgesetzt mit dem Ergebnis, dass mit fortsetzender Polymerisation und Aushärtung des SBS-Werkstoffes die dann noch anhaftenden PET-Partikel über eine Transportstrecke 14 in einem Abscheider 15 aufgefangen werden können.

Der nunmehr verbleibende SBS-Werkstoff kann vor Verlassen der Vorrichtung abschließend noch einem weiteren UV-Strahler 16 ausgesetzt werden, um sicherzugehen, dass der Werkstoff auspolymerisiert. Als Ergebnis steht dann ein für Recycling-Anwendungen ausreichend sortenreiner, gebrauchsfähiger Rohstoff für eine Weiterverwendung zur Verfügung, beispielsweise als Sackware 17, wie in dem Funktionsschema symbolisiert.

Der gesamte Prozess wird unter Stickstoff (N₂) als Prozessmedium geführt. Flüssiger Stickstoff wird zum einem zum kryogenen Trennen genutzt und zum anderen als Gas zum Sichten und Transportieren der anfallenden Partikel zu den einzelnen Abscheidern. Lediglich der Sichter 5 und die Transportstrecke 6 können auch mit Luft betrieben werden.

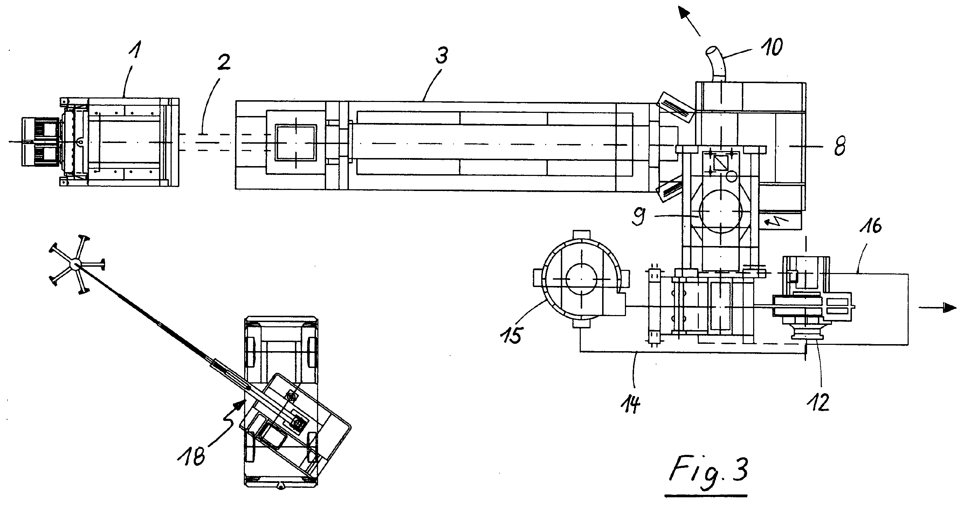

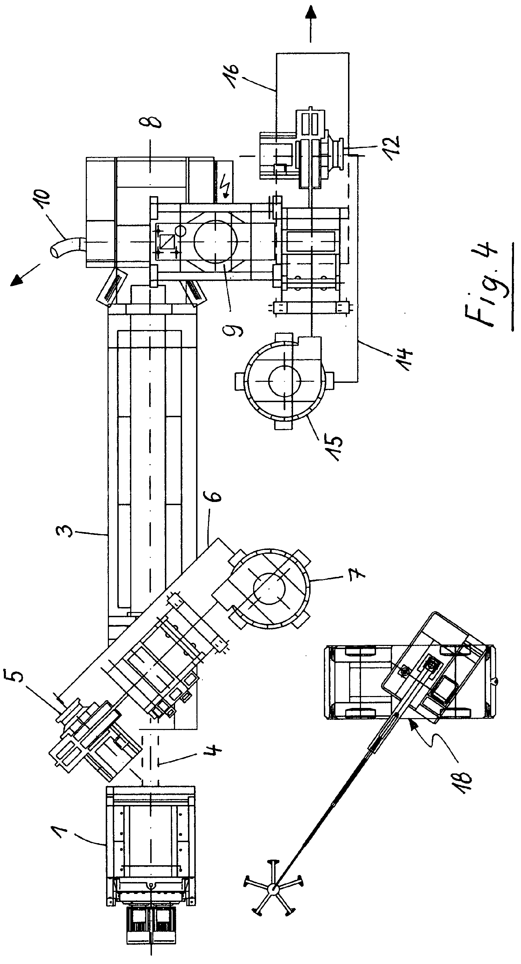

Die Fig. 3 und 4 zeigen erfindungsgemäße Vorrichtungen, ebenfalls noch schematisiert, aber bereits etwas deutlicher technisch ausgeprägt und zudem in ihrer tatsächlichen räumlichen Zuordnung. Es gelten die zuvor verwendeten Bezugszeichen in der genannten ursprünglichen Bedeutung.

Zusätzlich ist ein mobiles Beschickungsgerät 18 der jeweiligen Vorrichtung zugeordnet.

### Bezugszeichenliste

- 1: Schredder
- 2: Transportstrecke
- 3: Tiefkühler, Drehrohr
- 4: Transportstrecke
- 5: Sichter
- 6: Transportstrecke
- 7: Abscheider
- 8: Schneidmühle
- 9: Rüttelsieb
- 10: Transportstrecke
- 11: Abscheider
- 12: Sichter
- 13: UV-Strahleranlage
- 14: Transportstrecke
- 15: Abscheider
- 16: UV-Strahler
- 17: Sackware
- 18: Beschickungsgerät

## Patentansprüche

1. Verfahren zum Rückgewinnen der Ausgangsstoffe von mehrlagigen Verbundwerkstoffen mit mindestens einer Lage mit klebriger Oberfläche, wie Flexfolien oder dergleichen mit einer teigigen Mittelschicht oder -lage aus einer polymerisierten Kunststoffmischung auf der Basis von Styrobutadienstyrol (SBS) mit an der Oberfläche anhaftenden Abdeckfolien aus einem Polymerisat wie z. B. Poly-Ethylen-Terephthalat (PET), **dadurch gekennzeichnet,**
- **dass** der aufzubereitende Verbundwerkstoff - vorzugsweise mittels flüssigem Stickstoff (N₂) - tiefgekühlt und in gefrostetem Zustand vermahlen und gesiebt wird, wobei anfallendes Feinkorn oder Staub als störende Fraktion abgeführt und für eine mögliche anderweitige Verwertung aufgefangen wird,
- **dass** anschließend der verbliebene Werkstoff mit UV-Licht zwecks vollständiger Polymerisation bestrahlt und danach einem Sichter zugeführt wird, von wo Abdeckfolien-Partikel als weitere Fraktion und wieder verwendbarer Rohstoff (PET) abgeführt und aufgefangen werden, und
- **dass** der danach verbleibende, allein noch aus dem Material der ursprünglichen Mittelschicht bestehende Werkstoff ggf. unter weiterer Bestrahlung mit UV-Licht als wieder verwendbarer Rohstoff (SBS) entnommen wird.

2. Verfahren nach Anspruch 1, **dadurch gekennzeichnet, dass** der Verbundwerkstoff zuerst vorzerkleinert und insbesondere geschreddert wird.

3. Verfahren nach Anspruch 1 oder 2, **dadurch gekennzeichnet, dass** zur Entfernung und Rückgewinnung von nur schwach anhaftenden Abdeckfolien der ggf. vorzerkleinerte Verbundwerkstoff zunächst einem ersten Sichter zugeführt wird, von wo die schwach anhaftenden, leichten und abgängigen Abdeckfolien-Partikel als erste Fraktion abgeführt und als wieder verwendbarer Werkstoff (PET) aufgefangen werden.

4. Verfahren nach einem der Ansprüche 1 bis 3, **dadurch gekennzeichnet, dass** der verbleibende, allein noch aus dem Material der ursprünglichen Mittelschicht bestehende Werkstoff abschließend nochmals mit UV-Licht bestrahlt wird.

5. Verfahren nach einem der Ansprüche 1 bis 4, **dadurch gekennzeichnet, dass** der verbleibende, allein noch aus dem Material der ursprünglichen Mittelschicht bestehende Werkstoff am Ende des Verfahrens abgesackt, gewogen und ggf. weiter verpackt wird.

6. Vorrichtung zur Durchführung des Verfahrens nach einem der Ansprüche 1 bis 5, **gekennzeichnet durch** eine Aufgabestation und sich daran anschließende Transportstrecken (2, 4, 6, 10, 14) zur Beförderung des aufzuarbeitenden Werkstoffes, wobei die Transportstrecken (2, 4, 6, 10, 14) nacheinander zu folgenden Einrichtungen führen: einem Tiefkühler (3), einer Schneidmühle (8), einem Rüttelsieb (9), mindestens einem UV-Strahler (13, 16), einem Sichter (12) sowie einem Abscheider (11, 15) und/oder einer Entnahmestation oder Abfüllstation.

7. Vorrichtung nach Anspruch 6, **dadurch gekennzeichnet, dass** sie zusätzlich einen Schredder (1) zur anfänglichen Vorzerkleinerung des gesamten Werkstoffes umfasst sowie daran anschließend einen ersten Sichter (5) zur Trennung nur schwach anhaftender Abdeckfolien-Partikel von der teigigen Mittelschicht und einen ersten Abscheider (7) und/oder eine erste Entnahmestation oder Abfüllstation für das wieder verwendbare Material (PET) der Abdeckfolie.

## Claims

1. Method for recovering the starting materials from multi-layer sandwich materials with at least one layer with a tacky surface, such as flex foils or the like with a pasty middle layer or course of a polymerised plastic blend based on styro-butadiene-styrene (SBS) with covering foils made of a polymer such as for example polyethylene-terephthalate (PET) adhering to the surface, **characterised in that**
- the sandwich material to be processed is deep-frozen - preferably by means of liquid nitrogen (N₂) - and ground and screened in the frozen state, wherein fine grit or dust that occurs is removed as a disturbing fraction and collected for possible recovery by other means,
- **in that** then the remaining material is irradiated with UV-light to ensure complete polymerisation and then fed to a sifter from which as a further fraction particles of covering foil and reusable raw material (PET) are removed and collected, and
- **in that** the material remaining after that consisting solely of the material of the original middle layer, is extracted as a reusable raw material (SBS), when applicable after further irradiation with UV light.

2. Method according to claim 1, **characterised in that** the sandwich material is first comminuted and in particular shredded.

3. Method according to claim 1 or 2, **characterised in that** for removal and recovery of covering foils only adhering weakly, the when applicable comminuted sandwich material is first fed to a sifter from where the weakly adhering light and waste particles of covering foil are removed as the first fraction and collected as a reusable material (PET).

4. Method according to one of claims 1 to 3, **characterised in that** the remaining material now consisting solely of the material of the original middle layer, is finally irradiated again with UV light.

5. Method according to one of claims 1 to 4, **characterised in that** the remaining material now consisting solely of the material of the original middle layer, is bagged at the end of the process, weighed and when applicable repackaged.

6. Device for implementing the method according to one of claims 1 to 5, **characterised by** a feeding station and adjoining conveyor lines (2, 4, 6, 10, 14) for transporting the material to be processed, wherein the conveyor lines (2, 4, 6, 10, 14) lead successively to the following devices: a deep-freezer (3), a cutting mill (8), a vibrating screen (9), at least one UV irradiating unit (13, 16), a sifter (12) and a separator (11, 15) and/or an extraction station or filling station.

7. Device according to claim 6, **characterised in that** it additionally comprises a shredder (1) for initial comminution of the complete material and following this a first sifter (5) for separating only weakly adhering particles of covering foil from the pasty middle layer and a first separator (7) and/or a first extraction station or filling station for the reusable material (PET) of the covering foil.

## Revendications

1. Procédé pour récupérer des matières premières de matériaux composites multicouches avec au moins une couche avec surface adhésive, comme des films flexibles ou similaires, avec une couche ou strate centrale pâteuse composée d'un mélange en matière plastique polymérisé, sur la base de styrène-butadiène-styrène (SBS) avec des films de revêtement adhérant à la surface, en polymérisat, comme par exemple, du polyéthylène téréphtalate (PET), **caractérisé en ce que** le matériau composite à traiter, de préférence au moyen d'azote liquide (N2), est surgelé et à l'état gelé, broyé et tamisé, le grain fin ou la poussière produit étant évacué en tant que fraction gênante, et collecté pour une éventuelle autre utilisation, **en ce qu'**ensuite, la matière restante est irradiée avec de la lumière UV aux fins de polymérisation totale, et ensuite acheminée à un séparateur, à partir duquel les particules de film de revêtement sont évacuées et collectées en tant qu'autre fraction et autre matière première réutilisable (PET,) et **en ce que** le matériau restant alors, composé uniquement encore du matériau de la couche centrale initiale, est retiré, le cas échéant sous irradiation à la lumière UV, en tant que matière brute réutilisable (SBS).

2. Procédé selon la revendication 1, **caractérisé en ce que** le matériau composite est, en premier lieu, préalablement concassé et en particulier, broyé.

3. Procédé selon la revendication 1 ou 2, **caractérisé en ce que**, pour retirer et récupérer les films de revêtement, adhérant uniquement faiblement, le matériau composite, le cas échéant préconcassé, est tout d'abord acheminé à un premier séparateur, à partir duquel les particules de film de revêtement mises au rebut, légères et faiblement adhérentes, sont évacuées en tant que première fraction et collectées en tant que matériau (PET) réutilisable.

4. Procédé selon l'une des précédentes revendications 1 à 3, **caractérisé en ce que** le matériau restant, composé uniquement encore du matériau de la couche centrale initiale, est pour finir encore une fois irradié à la lumière UV.

5. Procédé selon l'une des revendications 1 à 4 **caractérisé en ce que** le matériau restant, composé uniquement encore du matériau de la couche centrale initiale, est à la fin du procédé, ensaché, pesé et le cas échéant, ultérieurement emballé.

6. Dispositif pour réaliser le procédé selon l'une des revendications à 1 à 5, **caractérisé par** une station d'alimentation et des sections de transport (2, 4, 6, 10, 14) s'y raccordant pour acheminer le matériau à traiter, les sections de transport (2, 4, 6, 10,14) conduisant, à la file, aux dispositifs suivants : un surgélateur (3), un broyeur de découpage (8), un tamis vibrant (9), au moins un émetteur d'UV (13, 16), un séparateur (12) ainsi qu'un sélecteur (11, 15) et/ou une station de déchargement ou une station de remplissage.

7. Dispositif selon la revendication 6, **caractérisé en ce qu'**il comprend, en plus, un broyeur (1) pour le prébroyage initial de tout le matériau, ainsi qu'un premier séparateur (5) s'y raccordant, pour séparer les particules de films de revêtement adhérant uniquement faiblement de la couche centrale pâteuse et un premier sélecteur (7) et/ou une première station de déchargement ou station de remplissage pour le matériau réutilisable (PET) du film de revêtement.
